# EUROPEAN PATENT APPLICATION

(11) **EP 1 134 018 A1**
(43) Date of publication of application: **19.09.2001**
(21) Application number: 00104595.4
(22) Date of filing: 15.03.2000
(51) Int. Cl.: B01D 53/88, B01D 53/86, F23G 7/06

(54) **Exhaust gas processing apparatus**

(71) Applicant: Trinity Industrial Corporation, Toyota-shi, Aichi 471-0855 (JP)
(72) Inventor: Murachi, Mikio, Toyota-shi, Aichi (JP); Shakubo, Kouji, Toyota-shi, Aichi (JP); Takaji, Kazuhiko, Toyota-shi, Aichi (JP); Yamamoto, Takao, Toyota-shi, Aichi (JP); Sano, Yoshihiro, Toyota-shi, Aichi (JP); Nomura, Akihiro, Toyota-shi, Aichi (JP)
(74) Representative: Stachow, Ernst-Walther, Prof. Dr.

(57) **Abstract**

An exhaust gas processing apparatus having a charge/discharge distribution device for a heat accumulation chamber divided into a charge region of introducing an exhaust gas into an exhaust gas processing chamber, a discharge region of discharging a purified gas from the exhaust gas processing chamber and a purge region of passing a purge gas for discharging the not processed exhaust gas remaining in the heat accumulation chamber, the distribution device having a rotor equipped with a purge chamber for passing the purge gas between a charge chamber for introducing the not processed exhaust gas and a discharge chamber for discharging the purified gas, the rotor having an opened disk that rotates opposing to the lower surface of the heat accumulation chamber and comprises a charge opening for introducing the exhaust gas from the charge chamber to the charge region and a discharge opening for discharging the purified gas from the discharge region to the discharge chamber and a purge opening formed between the charge opening and the discharge opening for communicating them.

## Description

### BACKGROUND OF THE INVENTION

### Field of the Invention

The present invention relates to an exhaust gas processing apparatus for applying purification processing by direct combustion or catalytic combustion of noxious ingredients contained in exhaust gases and recovering and re-utilizing heat generated upon processing.

### Related Art Statement

In various kinds of facilitates such as coating booths, drying furnaces for coating, drying furnaces for printing, production facilitates for plastics or plywood, food processing facilities, industrial waste disposing facilities, or perfume production facilities, alcohols, esters, as well as burnable noxious malodor ingredients which are noxious and exhibit peculiar odors such as phenols and aldehydes are generated from paints, inks, solvents, adhesives, synthetic resins or chemicals. Since exhaust gases containing the noxious malodor ingredients can not be released directly in the atmospheric air with a view point of preventing public pollution, they are usually put to purification processing and released in a non-toxic and deodored state.

Then, for the purification processing of the exhaust gases, heat exchanging type exhaust gas processing apparatus for converting burnable noxious ingredients in the exhaust gases into non-toxic materials by direct combustion or catalytic combustion and, recovering the heat generated upon processing into a heat accumulators and re-utilizing the heat as a heat source for heating the exhaust gases have been proposed (Japanese Published Unexamined Patent Application Nos. 332523, 332524 and 66005/1993).

Such heat exchanging type exhaust gas processing apparatus are classified into a two tower type, a three tower type or a multi-tower type depending on the number of heat accumulation chambers and, when the apparatus has three or more heat accumulation chambers, a charge operation of introducing an exhaust gas, a discharge operation of discharging the purified gas and a purge operation of purging the remaining not processed exhaust gas can be conducted on every heat accumulation chambers and exhaust gases can be processed continuously while alternatively switching them successively (refer to Japanese Published Unexamined Patent Application Nos. 152120, 253448, 262434 and 264521/1997)

However, since a charge duct, a discharge duct and a purge duct are connected each by one, namely, three in total to each of the heat accumulation chambers and an automatic damper has to be interposed in each of the ducts, in this case, nine ducts and nine automatic dampers in total are necessary for three heat accumulation chambers.

The automatic damper repeats ON/OFF operation with no interruption on every about one min during operation of the apparatus and the gas passing through the damper reaches a temperature as high as about 200 to 500°C. Therefore, there has been a problem that durability and heat resistance are required for the automatic dampers, and those large in the scale and expensive in the cost, excellent in mechanical strength and formed into a heat resistant structure have to be used.

Accordingly, there has been also a problem that the initial cost for the apparatus is expensive and a large installation space has to be ensured including the space for installing the dampers when the apparatus is adopted.

In view of the above, it has been proposed recently a heat exchanging type exhaust gas processing apparatus capable of distributively charging and discharging gases to and from each of heat accumulation chambers successively by using one rotary type distribution device for switching flow channels for communication of the charge duct, the discharge duct and the purge duct with each of the heat accumulation chambers (refer to Japanese Published Unexamined Patent Application No. 61940/1998 and Japanese Patent Application No. 85175/1998).

In the proposed apparatus, heat accumulation chambers are provided by the number of three to eight adjacent with an exhaust gas processing chamber that purifies burnable noxious ingredients by heating the exhaust gas to a predetermined temperature, and flow channels from the charge duct, the discharge duct and the purge duct to each of the heat accumulation chambers is switched successively by one rotary type charge/discharge distribution device.

According to this constitution, since there is no requirement of providing a plurality of dampers, the initial cost can be saved by so much and the apparatus can be installed even in a relatively narrow space.

By the way, in the rotary type charge/discharge distribution device, a rotor is disposed opposing to each of the openings in communication with each of the heat accumulation chambers, and the rotor is provided with a charge chamber, a discharge chamber and a purge chamber connected to a charge duct, a discharge duct and a purge duct, respectively, and openings in communication with each of the chambers, such that the openings of the rotor are successively in communication with each of the openings in communication with each of the heat accumulation chambers by the rotation of the rotor thereby switching the gas charging/discharging direction.

Accordingly, for the smooth rotation of the rotor, a gap is necessary between the housing of the charge/discharge distribution device and the rotor and it is difficult to maintain the chambers formed to the rotor in a gas tight manner to each other.

This results in a problem that the not processed exhaust gas introduced into the charge chamber passes by way of the gap through the discharge chamber and leaks as it is, without being processed, to the outside.

Further, a gap is formed for rotation of the rotor also between the opening of the rotor and the opening in communication with the heat accumulation chamber, but this results in a problem that the not processed exhaust gas on the charging side passes by way of the gap through the discharging side and leaks as it is, without being processed, to the outside.

While the leakage of the not processed exhaust gas is intended to be prevented by disposing packings in the gap in some prior art apparatus. However, since the rotor always rotates during exhaust gas processing, namely, operation of the factory, the packings tend to be frictionally worn and, accordingly, may lead to leakage of the not processed exhaust gases through the gaps caused by worn packings if sealing is provided only by the packings.

Further, if the not processed exhaust gas passing through the charge region of the heat accumulation chamber is sucked into the adjacent discharge region while not being burnt completely in the exhaust gas processing chamber, the not processed gas also leaks as it is to the outside.

### OBJECT OF THE INVENTION

In view of the above, it is a technical subject of the present invention to enable reliable sealing for each of the flow channels on the gas charging and discharging sides by an extremely simple constitution such that the not-processed exhaust gas introduced into the exhaust gas processing chamber may not be leaked as it is without being processed state.

### SUMMARY OF THE INVENTION

For attaining the foregoing object, the present invention provides an exhaust gas processing apparatus having a charge/discharge distribution device adapted to divide a heat accumulation chamber for conducting heat exchange between a purified gas at a high temperature after combustion processing in an exhaust gas processing chamber and a not-processed exhaust gas at a low temperature to be introduced in the exhaust gas processing chamber into at least three regions including a charge region of introducing the not processed exhaust gas into the exhaust gas processing chamber, a discharge region of discharging the purified gas from the exhaust gas processing chamber and a purge region of passing a purge gas for discharging the not processed exhaust gas remaining in the heat accumulation chamber, and switching each of the regions successively,
the charge/discharge distribution device having a rotor equipped with a purge chamber for passing the purge gas between a charge chamber for introducing the not processed exhaust gas and a discharge chamber for discharging the purified gas,
the rotor having an opened disk that rotates opposing to the lower surface of the heat accumulation chamber, and
an opened disk comprising a charge opening for introducing the not processed exhaust gas from the charge chamber to the charge region and a discharge opening for discharging the purified gas from the discharge region to the discharge chamber which are formed along the rotational direction, and a purge opening which is formed between the charge opening and the discharge opening for communicating the purge chamber with the purge region.

According to the present invention, since the purge chamber is formed between the charge chamber and the discharge chamber in the rotor, the charge chamber and the discharge chamber are not formed adjacent with each other, even when the not processed exhaust gas leaks from the charge chamber, it flows only to the purge chamber and scarcely passes through the purge chamber and, further, flows into the discharge chamber.

In this case, when the pressure in the purge chamber is made positively higher than that of the charge chamber, the not processed gas scarcely flows also to the purge chamber.

Further, since the purge opening is formed between the charge opening and the discharge opening in the opened disk of the rotor, so that the charge opening and the discharge opening are not formed adjacent with each other, even when the not processed exhaust gas flowing out of the charge opening does not flow into the charge region of the heat accumulation chamber but flows through the gap between the opened disk and the heat accumulation chamber and flows toward the discharge opening, the not processed exhaust gas is flown to the exhaust gas processing chamber being entrained on the purge gas blown out of the purge opening.

Accordingly, the not-processed exhaust gas can be prevented from passing through the gap between the opened disk and the heat accumulation chamber and reaching as it is from the discharge opening to the outside.

Furthermore, since the purge opening is formed between the charge opening and the discharge opening in the opened disk of the rotor, the purge region is formed also between the charge region and the discharge region in the heat accumulation chamber, so that the charge region and the discharge region are not formed in adjacent with each other.

Accordingly, even when the not processed exhaust gas passing through the charge region should flow without being sufficiently burnt in the exhaust gas processing chamber to the discharge region, it is inhibited by the purge gas blown out of the purge region and does not flow as it is into the discharge region.

### DESCRIPTION OF THE ACCOMPANYING DRAWINGS

Fig. 1 is an explanatory view illustrating an exhaust gas processing apparatus as a first embodiment according to the present invention;
Fig. 2 is a cross sectional view taken along line X-X in Fig. 1,
Fig. 3 is a cross sectional view taken along line Y-Y in Fig. 1;
Fig. 4 is a schematic perspective view illustrating another heat accumulation chamber;
Fig. 5 is a graph showing the change of temperature;
Fig. 6 is a schematic explanatory view illustrating a main portion of a second embodiment according to the present invention;
Fig. 7 is a cross sectional view of thereof;
Fig. 8 is a perspective view illustrating a portion of an opened disk;
Fig. 9 is a schematic explanatory view illustrating a main portion of a third embodiment according to the present invention;
Fig. 10 is a partially cut away cross sectional view of the third embodiment,
Fig. 11 is a schematic explanatory view illustrating a fourth embodiment according to the present invention;
Fig. 12 is a cross sectional view thereof;
Fig. 13 is a schematic explanatory view illustrating a fifth embodiment according to the present invention;
Fig. 14 is a cross sectional view thereof.

### DESCRIPTION OF THE PREFERRED EMBODIMENTS

### (First Embodiment)

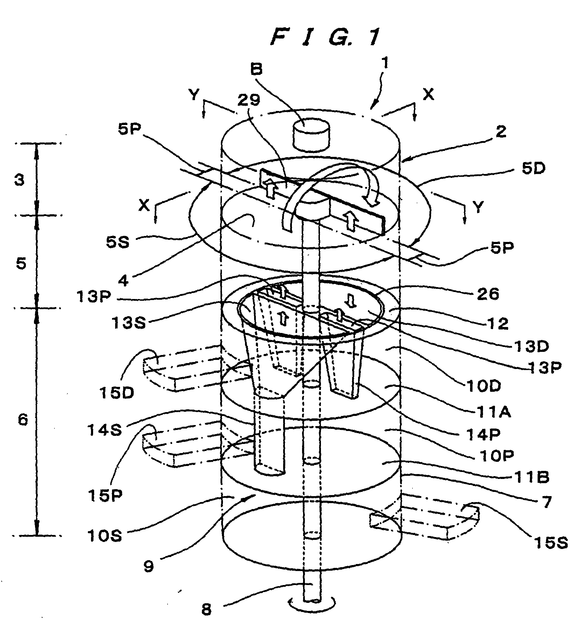

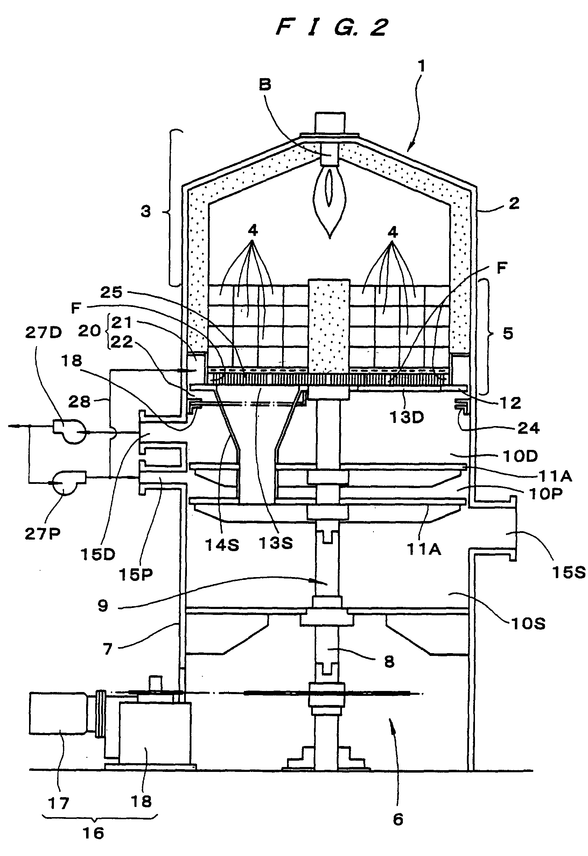

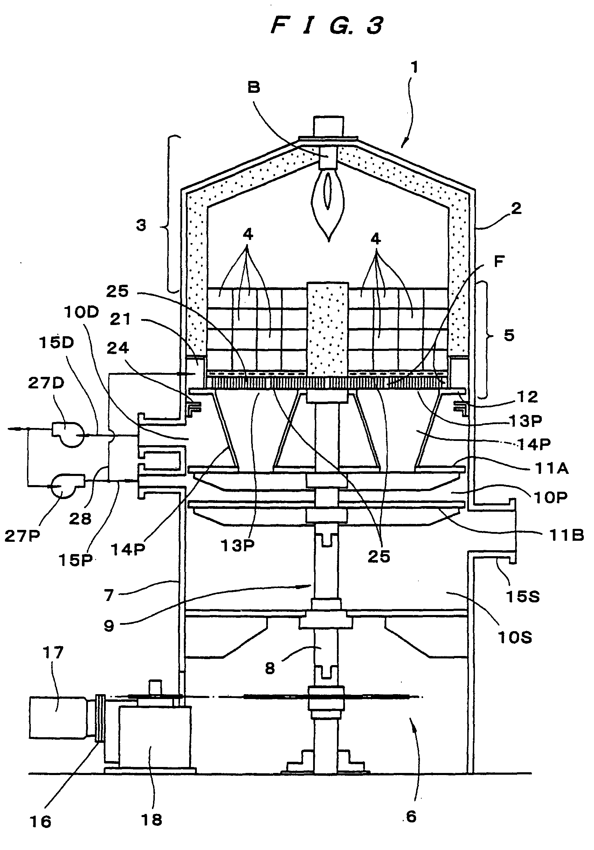

An exhaust gas processing apparatus 1 shown in Fig. 1 to Fig. 4 has an exhaust gas processing chamber 3 formed at an upper stage of a processing tower 2 having a cylindrical inner surface for heating a exhaust gas to a predetermined processing temperature by a burner B to directly burn thereby clean burnable noxious ingredients contained in the exhaust gas for purification processing.

A heat accumulation chamber 5 having heat accumulators 4, 4--- filled therein is formed at an intermediate state of the processing tower 2. The accumulator is adapted to recover the heat of purified gas at high temperature discharged from the exhaust gas processing chamber 3 and previously heat not-processed exhaust gas upon introducing the not-processed exhaust gas at low temperature to the exhaust gas processing chamber 3 by releasing the heat of the accumulators per se.

The heat accumulator 4 used herein comprises a honeycomb structure (monolith) in which continuous heat exchange flow channels are formed vertically or granular ceramic molding products formed into saddle, pellet or like other optional granular forms.

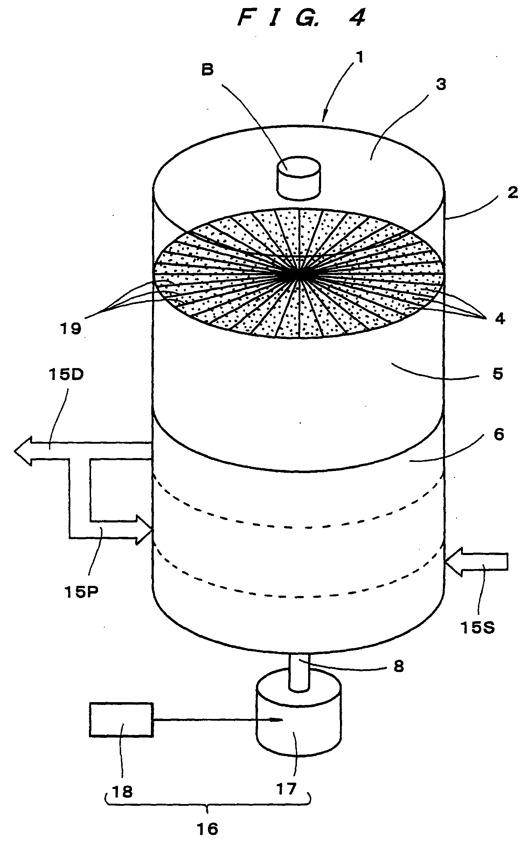

When the honeycomb structures are used, they are piled in the heat accumulation chamber 5 as shown in Fig. 1 to Fig. 3. When the granular ceramic molding products are used, they are filled in a plurality of heat exchanging flow channels 19 formed by radially partitioning the heat accumulation chamber 5 as shown in Fig. 4.

At the lower stage of the processing tower 2, the heat accumulation chamber 5 is partitioned at least into three regions of a charge region 5S, a discharge region 5D and a purge region 5P, and a charge/discharge distribution device 6 is disposed for switching each of the regions 5S, 5D and 5P successively.

The charge/discharge distribution device 6 comprises a rotor 9 having a rotational shaft 8 along a vertical axis in the housing 7. The rotor 9 comprises disks 11A and 11B for partitioning the inside of the housing 7 into a discharge chamber 10D at an upper stage, a purge chamber 10P at an intermediate stage and a charge chamber 10S at a lower stage and an opened disk 12 that rotates facing the opening at the lower end of the heat accumulation chamber 5.

The opened disk 12 has a charge opening 13S for introducing a not processed exhaust gas from the charge chamber 10S to the charge region 5S and a discharge opening 13D for discharging the purified gas from the discharge region 5D to the discharge chamber 10D, and has purge openings 13P, 13P formed at two position between the charge opening 13S and the discharge opening 13D for communication between the purge chamber 10P and the purge region 5P.

The charge opening 13S and the discharge opening 13D are formed each as a substantially semicircular shape apertured at the outside of parallel lines drawn on the opened disk 12 with the rotational shaft 8 being put therebetween, and the purge openings 13P, 13P are apertured each slitwise at the inner side of the parallel lines.

The charge opening 13S formed in the opened disk 12 is in communication with the charge chamber 10S by way of a duct 14S formed through the disks 11A, 11B, the discharge chamber 10D and the purge chamber 10P.

Further, the purge opening 13P is in communication with the purge chamber 10P by way of a duct 14P formed through the disk 11A and the discharge chamber 10D.

In the charge region 5S of the heat accumulation chamber 5 in communication with the charge opening 13P, a charge operation of introducing the not processed exhaust gas into the exhaust gas processing chamber 3 is conducted. In the discharge region 5D of the heat accumulation chamber 5 in communication with the discharge opening 13D, a discharge operation of discharging the purified gas to the discharge chamber 10D is conducted. In the purge region 5P in communication with the purge opening 13P, a purge operation of introducing, for example, the purified gas to purge the not processed exhaust gas remaining in the purge region 5P is conducted.

Further, a charge duct 15S, a discharge duct 15D and a purge duct 15P are connected to the side wall of the housing 7. The charge duct 15S introduces the not processed exhaust gas sent from an exhaust gas generation source (not illustrated) into the charge chamber 10S, the discharge duct 15D discharges the purified gas processed in the exhaust gas processing chamber 3 from the discharge chamber 10D to the outside and the purge duct 15P introduces a portion of the purified gas discharged from the discharge duct 15D, as a purge gas, into the purge chamber 10P.

A driving device 16 for rotating the rotor 9 comprises a motor 17 and a rotational number controller 18 for variably controlling the number of rotation of the motor.

The rotational number controller 18 variably controls the number of rotation between ordinary operation for conducting exhaust gas processing at a predetermined heat exchange efficiency and burn out operation for removing resinous materials deposited to heat accumulators 4, and the number of rotation during the burn out operation is set lower than the number of rotation during ordinary operation to such an extent that the open face at the lower end of the heat accumulators 4 is heated to a temperature for evaporating the resinous materials.

For instance, when the number of rotation of the rotor 9 is set to 1/2-2 rpm in the ordinary operation, the number of rotation for the burn out operation is set to 1/20 - 1/5 rpm.

An air seal 20 is formed along the periphery of the opened disk 12 such that the not-processed exhaust gas supplied from the charge opening 13S does not leak through the gap between the circumferential surface of the opened disk 12 and the housing 7 into the discharge chamber 10D.

The air seal 20 comprises an annular positive pressure chamber 21 formed to the lower end for the side wall of the heat accumulation chamber 5 along the peripheral edge on the upper surface of the opened disk 12, and a positive pressure chamber 22 formed to the lower surface of the charge opening 13S of the opened disk 12.

The positive pressure chamber 22 is formed such that the opened disk 12 is opened at the circumferential edge by a seal plate 23 attached in parallel with the opened disk 12, and the seal plate 23 is in sliding contact, at the top end facing to the inner circumferential surface of the housing 7, with a guide rail 24 formed to the inner circumferential surface of the housing 7.

Further, a support frame F for supporting the heat accumulators 4 is disposed to the open face at the lower end of the heat accumulation chamber 5 to form a gap corresponding to the thickness of the support frame F between the rotor 9 and the heat accumulators 4. Honeycomb structures 24 each having a number of vertically penetrating flow channels of small diameter are filled in the gap.

With such a constitution, each of the openings 13S, 13D and 13P formed in the opened disk 12 are in less communication by way of the gap, and heat resistant packings 26, 26, --- in sliding contact with the end face of the honeycomb structures 25 are optionally attached at the boundary between each of the openings 13S and 13D and 13P.

An discharge blower 27D is interposed in the discharge duct 15D. The purge duct 15P is branched from the discharge duct 15D at the discharge side of the discharge blower 27D and connected by way of a purge blower 27P to the purge chamber 10P.

Further, a purified gas charge duct 28 is branched at the discharge side of the purge blower 27P from the purge duct 15P for supplying purified gas to the positive pressure chambers 21, 22 of the air seal 20.

Further, in the open face at the upper end of the heat accumulators 4 facing the exhaust gas processing chamber 3, a partition plate 29 is attached to the rotational shaft 8 of the rotor 9 passing through the exhaust gas processing chamber 3, for partitioning the boundary between the charge region 5S and the purge region 5P, and the discharge region 5P. The partition plate is rotated in synchronization with the rotor 9.

With this constitution, the exhaust gas passing through the charge region 5S and the purge region 5P and introduced into the exhaust gas processing chamber 3 passes over the partition plate 29, flows near the burner B and are then discharged from the discharge region 5D.

Accordingly, the exhaust gas introduced into the exhaust processing chamber 3 is effectively heated by the burner B and the exhaust gas can be purified more clearly.

### (Operation)

An example of the constitution for the present invention is as has been described above and the operation thereof is to be explained.

At first, the burner B is ignited and exhaust gas processing is conducted while rotating the rotor 9 by the driving motor 10, for example, at a rotational speed of two turns per minute.

In accordance with the rotation of the rotor 9, the heat accumulation chamber 5 functions as the charge region 5S at a portion opposing to the charge opening 13S of the opened disk 12 upon arrival of the opening 13S, as the discharge region 5D at a portion opposing to the discharge opening 13D upon arrival of the opening 13D and as the purge region 5S at a portion opposing to the purge opening 13P upon arrival of the opening 13P.

Then, a charge operation of introducing the not processed exhaust gas into the exhaust gas processing chamber 3 is conducted in the charge region 5S, a discharge operation of discharging the purified gas from the exhaust gas processing chamber 3 is conducted in the discharge region 5D and a purge operation of introducing the purge gas into the exhaust processing chamber 3 is conducted in the purge region 5P.

In this process, since the purge openings 13P and 13P are formed between the charge opening 13S and the discharge opening 13D in the opened disk 12, each of the heat accumulators 4 repeats the charge operations - purge operation - discharge operation - purge operation during one turn of the opened disk.

Referring to the procedure of the exhaust gas processing specifically, a not processed exhaust gas supplied from the exhaust gas generation source by way of the charge duct 15S are at first passed from the charge chamber 10S through the duct 14S, passed from the charge opening 13S through the charge region 5S opposing thereto and then introduced into the exhaust gas processing chamber 3.

In this process, since metal honeycomb structures 25 in which a plurality of vertically extending flow channels each of small diameter penetrated therein are disposed between the opened disk 12 of the rotor 9 and the heat accumulators 4 of the heat accumulation chamber 5, the not processed exhaust gas tends to flow easily from the charge opening 13S to the flow channels in the honeycomb structures 25 into the heat accumulation chamber 5, while the lateral gas flow is regulated.

Further, as shown in this embodiment, when the heat resistant packings 26, 26 --- in sliding contact with the end face of the honeycomb structures 25 are attached at the boundary between each of the openings 13S, 13D, 13P and 13P formed in the opened disk 12, leakage of the not processed exhaust gas from the charge opening 13S to the discharge opening 13D can be prevented more reliably.

In this process, if the purified gas at high temperature from the exhaust gas processing chamber 3 has been passed previously through the heat accumulators 4 in the charge region 5S and the heat possessed in the gas is accumulated and recovered, the not processed exhaust gas passing through the charge region 5S is previously heated by the heat.

Then, in the exhaust gas processing chamber 3 burnable noxious ingredients contained in the exhaust gas are burnt by the burner B and purified.

Then, when the purified gas at high temperature is passed through the discharge region 5D and discharged from the discharge opening 13D to the discharge chamber 10D, the heat of the purified gas is accumulated and recovered to the heat accumulators 4 in the discharge region 5D and, subsequently, the purified gas is passed through the discharge duct 15D and discharged to the outside.

The purified gas discharged by way of the discharge duct 15D to the outside is partially supplied by way of the purge duct 15P and supplied to the purge chamber 10P, passed through the duct 14P and then introduced from the purge openings 13P and 13P into the purge regions 5P and 5P opposing thereto.

That is, the heat accumulators 4 are subjected to the purge operation after the completion of the charge operation and before starting the discharge operation, and the not processed exhaust gas remaining in the heat accumulators 4 is forced back by the purified gas to the exhaust processing chamber 3.

Accordingly, when the discharge operation is conducted, the exhaust gas in the not processed state is not discharged to the outside.

In this case, the size of the charge region 5S, the discharge region 5D and the purge regions 5P and 5P are determined by the open area of the charge opening 13S, the discharge opening 13D and the purge openings 13P and 13P.

When the rotor 9 is rotated at a speed of about 2 rpm, since the area required for the purge operation is about 1/72, if the area ratio between each of the openings 13S, 13D, 13P and 13P is determined as about 35 : 35 : 1 : 1, the purge operation can be conducted sufficiently after the completion of the feeding operation and 35/36 (97.2%) of the accumulators 4 can be effectively utilized for the charge operation and discharge operation having direct concern with the exhaust gas processing.

Further, since the purge chamber 10P is formed between the charge chamber 10S and the discharge chamber 10D in the charge/discharge distribution device 6, even if the not processed exhaust gas supplied to the charge chamber 10 should leak through the gap between the housing 7 and the rotor 9, the gas flows only into the chamber 10P and scarcely passes through the purge chamber 10P and reaches the discharge chamber 10D.

Further, when the pressure in the purge chamber 10P is made positively higher than that in the charge chamber 10S, the gas scarcely flows into the purge chamber 10P as well.

Further, since the purified gas is supplied to the air seal 20 formed along the circumferential edge on the open face of the heat accumulation chamber to form a positive pressure in the gap between the circumferential surface of the opened disk 12 and the housing 7, the not processed exhaust gas supplied from the charge opening 13S does not turn around the periphery of the opened disk 12 into the back surface thereof and leak to the discharge chamber 10D.

Further, since the purge openings 13P and 13P are formed between the charge opening 13S and the discharge opening 13D, even if the heat resistant packings 26 --- should happen to be worn and the not processed exhaust gas supplied from the charge opening 13S passes through the gap between the rotor 9 and the lower end of the heat accumulation chamber 5 and flows toward the discharge opening 13D, since the flow is inhibited before reaching the discharge opening 13D by the purge gas flowing from the purge openings 13P and 13P to the heat accumulation chamber 5, it does not reach the discharge opening 13S.

Furthermore, the purge region 5P is formed between the charge region 5S and the discharge region 5D also in the heat accumulation chamber 5 corresponding to each of the openings 13S, 13D and 13P of the opened disk 12 and the charge region and the discharge region are not formed adjacent with each other.

Accordingly, even if the not processed exhaust gas passing through the charge region 5S flows toward the discharge region 5D while not being burnt completely in the exhaust gas processing chamber 3, it is returned by the purge gas blown out of the purge region 5B into the exhaust gas processing chamber 3 and does not flow as it is into the discharge region 5D.

Then, since the partition plate 29 is disposed to the open face at the upper end of the heat accumulators 4 opposed to the exhaust gas processing chamber 3 for partitioning the boundary between the charge region 5S and the purge region 5P, and the discharge region 5D and adapted to rotate in synchronization with the rotor 9, the not processed exhaust gas introduced from the charge region 5S and the purge region 5P in the exhaust gas processing chamber 3 passes over the partition plate 29, flows near the burner B and then flows into the discharge region 5D.

Accordingly, the exhaust gas introduced into the exhaust gas processing chamber 3 is effectively heated by the burner B and the exhaust gas can be purified more cleanly.

Further, the purge operation is not only restricted to the case of introducing the purified gas by way of the purge duct 15P into the purge chamber 10P thereby enforcing the not processed exhaust gas into the exhaust gas processing chamber 3 but, alternatively, it may be conducted by introducing the purified gas in the exhaust gas processing chamber 3 directly into the purge region 5P, discharging the exhaust gas remaining in the region 5P into the purge chamber 12P, circulating the same from the purge duct 15P to the charge duct 15S and then supplying again to the exhaust gas processing chamber 3.

In this case, when the inner pressure in the purge chamber 10P at the intermediate stage is set lower than that in the charge chamber 10S and the discharge chamber 10D, the purge chamber 10P itself functions as the air seal for partitioning the feed channel 10S and the discharge chamber 10D.

That is, even when the not processed exhaust gas flows through the gap of the housing 7 from the charge chamber 10S to the purge chamber 10P, since the purified gas flows also from the discharge chamber 10D into the purge chamber 10P, the not processed exhaust gas from the charge chamber 10S does not pass through the purge chamber 10P and leaks from the discharge chamber 10D.

During the exhaust gas processing, the temperature of the heat accumulators 4 is lower at the lower end facing the charge/discharge distribution device 6 compared with that at the upper end facing the exhaust gas processing chamber 3 at high temperature.

For example, in a case when the not processed exhaust gas is burnt directly by the burner B in the exhaust gas processing chamber 3, the temperature detected at the lower end of the heat accumulators 4 ascends and descends at a short cycle between 150°C and 250°C as shown by the dotted line in Fig. 4 since the rotational speed of the rotor 9 is relatively high in the ordinary operation.

Then, when the temperature of the heat accumulators 4 descends to 150°C or lower, components of the organic solvent contained in the not processed exhaust gas are condensated to form resinous materials and deposit on the heat accumulators 4, which grow if left as they are to cause clogging in the heat accumulators 4.

In view of the above, a burn out operation is conducted periodically, for example, on every one month by elevating the temperature at the inside of the heat accumulation chamber 5 thereby evaporating to eliminate the resinous materials deposited to the heat accumulators 4 so as not to cause clogging in the heat accumulators 4.

In the present invention, the burn out operation can be conducted merely by lowering the number of rotation of the motor 17 so as to lower the rotation of the rotor 9 rotated at 1/2 - 2 rpm during ordinary operation down to 1/20-1/5 rpm by the rotational number controller 18.

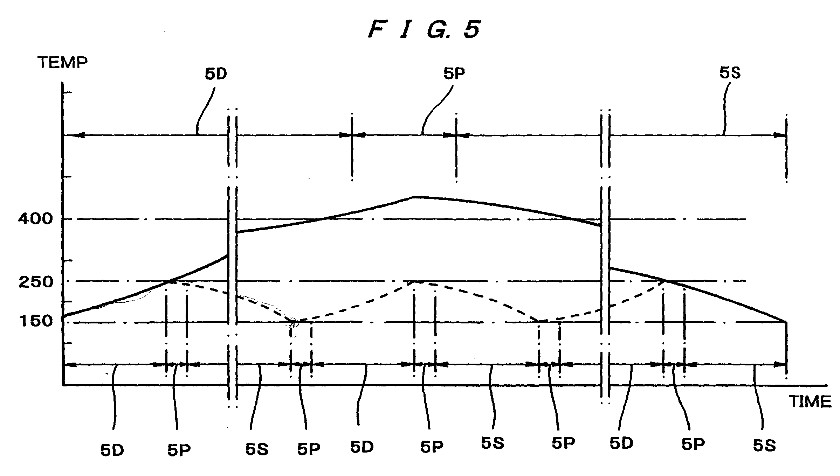

That is, when the number of rotation of the rotor 9 is lowered during burn out operation, the cycle of temperature change is made longer as shown by the solid line in Fig. 5, in which the temperature at the lower end of the heat accumulators 4 ascends and descends between 150°C to 450°C and the resinous materials are eliminated when the temperature exceeds the evaporation temperature of the resinous materials (about 400°C) .

Since the burn out operation can be conducted by merely lowering the number of rotation of the rotor 9 in which the not-processed exhaust gas is introduced into the exhaust gas processing chamber 3 to conduct purification and the processed exhaust gas is discharged to the outside quite in the same manner as the ordinary operation, burn out can operation be conducted simultaneously with the exhaust gas processing although the heat exchange efficiency is somewhat lowered.

In this process, the leading end of the discharge region 5D is in communication with the heat accumulators 4 at low temperature which has completed heat dissipation as the charge region 5S, while the rear end thereof is in communication with the heat accumulators 4 through which the processed exhaust gas at high temperature has been flown for a long period of time to accumulate heat sufficiently.

Accordingly, the purified gas discharged through the heat accumulators 4 on the side of the leading end of the discharge region 5D is deprived of the heat by the heat accumulators 4 and discharged at a relatively low temperature, while the purified gas exhausted through the heat accumulators 4 at the rear end is discharged at a relatively high temperature without being deprived of heat.

The temperature of the purified gas discharged through the discharge region 5D is averaged due to the mixing of the gases and kept at a temperature between them.

Accordingly, even when the number of rotation of the rotor 9 is lowered, there is no extreme temperature elevation, and the charge/discharge distribution device 6, the discharge duct 15D and the discharge blower 27D interposed therein can be made of materials of low heat resistant temperature.

While the present invention has been explained to one example of a direct burning type as the exhaust gas processing apparatus 1, the present invention is not restricted only thereto but may be applicable also to a catalytic combustion type.

In a case of the catalytic combustion type, a catalyst layer may be formed to the open face of the heat accumulators 4 opposing to the exhaust gas processing chamber 3.

### (Second Embodiment)

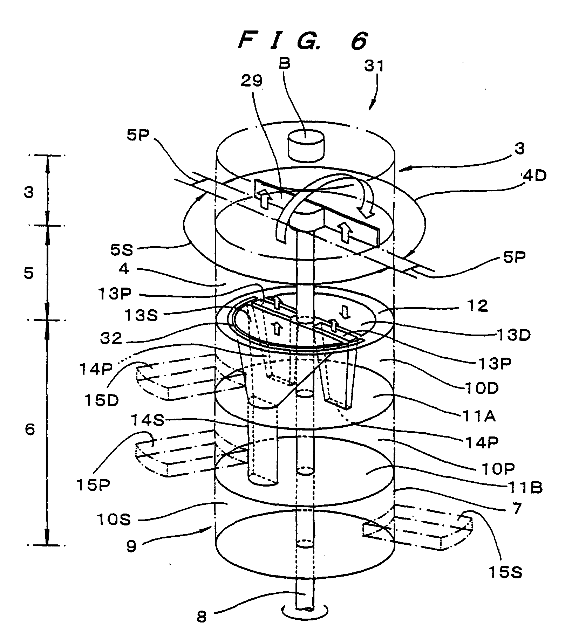

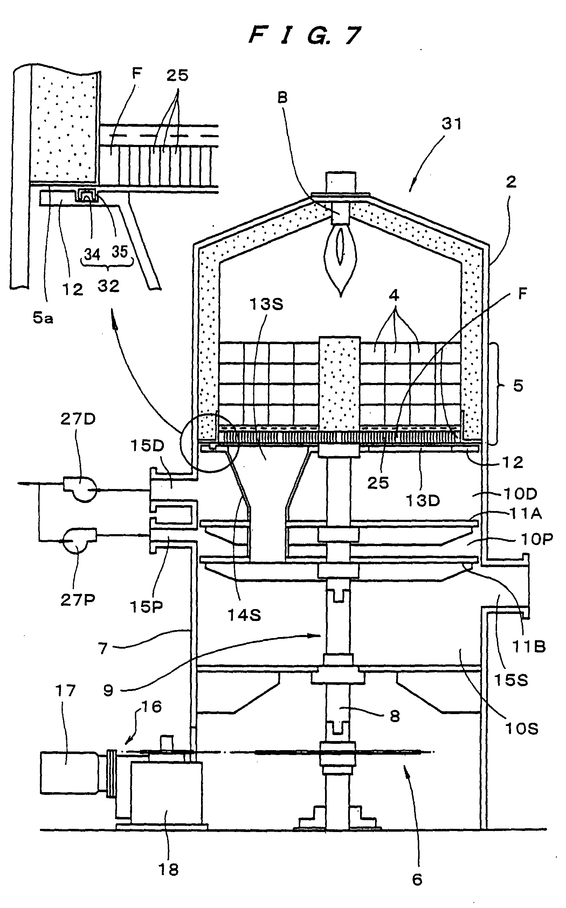

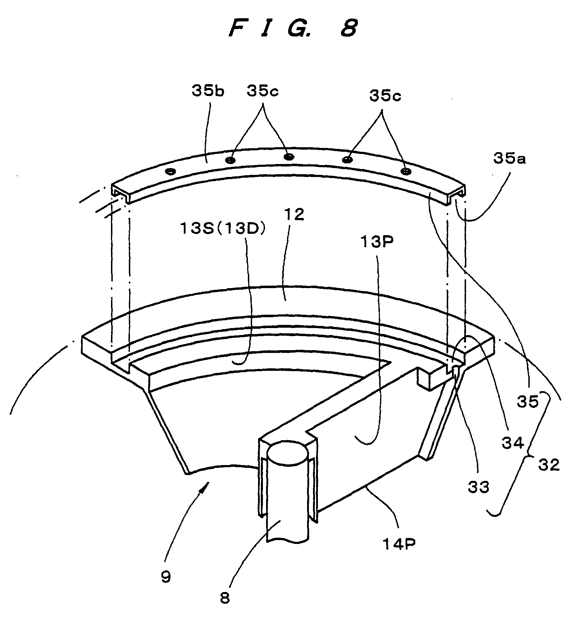

Fig. 5 to Fig. 8 show another exhaust gas processing apparatus according to the present invention, in which those portions in common with Fig. 1 to Fig. 3 carry identical reference numerals for which detailed explanation is to be omitted.

In an exhaust gas processing apparatus 31 of this embodiment, a seal mechanism 32 is formed along the peripheral edge of an opened disk 12 opposing to the lower end face 5a of the circumferential wall of the heat accumulation chamber 5 so as not to leak the not processed exhaust gas from the gap formed at the periphery of the opened disk 12 to the discharge chamber 10D.

The seal mechanism 32 includes a concave groove 34 formed to the outside of the charge opening 13S for defining a flow channel 33 in communication with a purge chamber 10P in which a purge gas supplied from the purge chamber 10P is partially supplied by way of a flow channel 33 into the concave groove 34 to maintain the inside of the concave groove 34 at a positive pressure.

When the inside of the concave groove 34 is kept at a positive pressure, the purge gas passes through the gap between the opened disk 12 and the lower end face 5a of the circumferential wall of the heat accumulation chamber 5 and flows to both of the heat accumulation chamber 5 and the discharge chamber 10D.

Accordingly, if the not processed exhaust gas blown from the charge opening 13S of the opened disk 12 should enter the gap between the opened disk 12 and the lower end face 5a of the circumferential wall of the heat accumulation chamber 5, since the not processed exhaust gas is forced back to the heat accumulation chamber 5, the not processed exhaust gas does not leak to the discharge chamber 10D.

Further, in the concave groove 34, a gap adjusting member 35 of a groove cross section is loosely fitted vertically movably with an opening 35a being downwarded for controlling a gap formed between the lower end face 5a of the circumferential wall of the heat accumulation chamber 5 and the opened disk 12.

The gap adjusting member 35 is made, for example, of aluminum, stainless steel, copper or steel material or heat resistant plastic material or ceramics and is adapted such that the member is raised till it is in sliding contact with the lower end face 5a of the circumferential wall of the heat accumulation chamber 5 by the pressure of the purge gas supplied to the concave groove 34 to surely close the gap, even if it is somewhat large, between the opened disk 12 and the lower end face 5a of the circumferential wall of the heat accumulation chamber 5.

Further, gas blowing ports 35c are perforated at a predetermined pitch to an upper face web 35b of the gap adjusting member 35, such that a slight gap is formed between the gap adjusting member 35 and the lower end face 5a of the circumferential wall of the heat accumulation chamber 5 by the pressure of the purge gas blown out of the gas blowing ports 3c when the gap adjusting member 35 is raised by the pressure of the purge gas.

In this constitution, the gap adjusting member 35 rotating together with the rotor 9 and the lower end face 5a of the circumferential wall of the heat accumulation chamber 5 are not directly abut against each other and the gap at the peripheral edge of the opened disk 12 can be reliably sealed.

### (Third Embodiment)

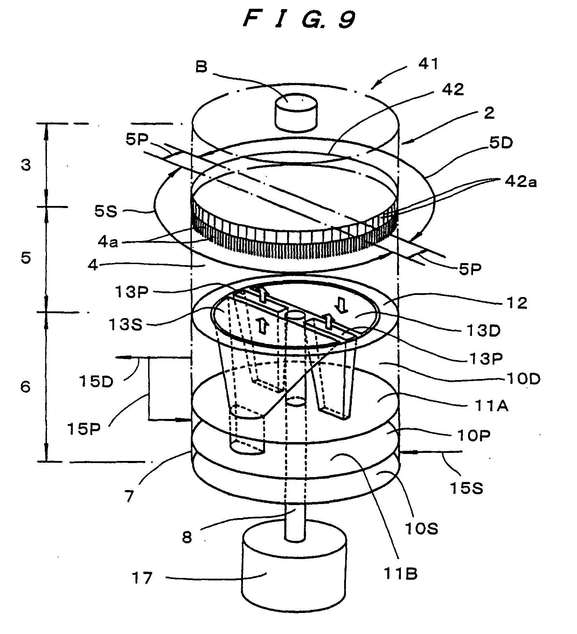

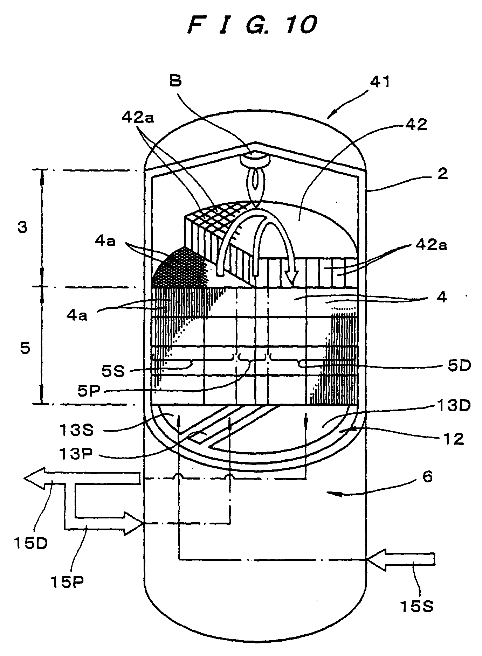

Fig. 9 and Fig. 10 show a further embodiment of the exhaust gas processing apparatus according to the present invention in which those portions in common with Fig. 1 to Fig. 3 carry the same reference numerals for which detailed explanations are to be omitted.

In an exhaust gas processing apparatus 41 of this embodiment, an exhaust gas processing chamber 3 is heated by a burner B to a predetermined processing temperature (750 to 800°C) thereby directly burning and purifying the not processed exhaust gas in which the not processed exhaust gas introduced from a charge region 5s to the exhaust gas processing chamber 3 is prevented from short-passing along the open face of the heat accumulators 4 to a discharge region 5d.

In the heat accumulation chamber 5, heat accumulators 4 made of ceramics or metals of honeycomb structures are disposed and the open face at the upper end is opposed to the exhaust gas processing chamber 3.

For the heat accumulators 4, those having vertically penetrating honeycomb flow channels 4a each of a relatively fine mesh size of 80 cell or more (per 1 square inch) are used and a 100 cell structure is adopted in this embodiment.

Further, in the exhaust gas processing chamber 3, honeycomb structures 42 each of a mesh size coarser than that of the heat accumulators 4 are disposed opposing to the open face at the upper end of the heat accumulators 4, in which extending flow channels 42a for extending the honeycomb flow channels 4a of the heat accumulators 4 into the exhaust gas processing chamber 3 are defined with the honeycomb flow channels of the honeycomb structures 42.

The honeycomb structure 42 is formed of ceramics or metals having heat resistance capable of enduring the processing temperature in the exhaust gas processing chamber 3, and the structure of a coarse mesh size having 50 cells or less of honeycomb flow channels (per one square inch) are used such that the internal temperature reaches the exhaust gas processing temperature for combustion of burnable noxious ingredients contained in the not processed exhaust gas. In this embodiment, the 13 cell structure is used.

In this embodiment, since the extending flow channels 42a --- are formed for extending the honeycomb flow channels 4a of the heat accumulators 4 on the side of the charge region 5S, the not processed exhaust gas flows along the flow line in an inverted U-configuration such that it is guided through the extending flow channels 42a to the exhaust gas processing chamber 3, reversed its flow direction in the exhaust gas processing chamber 3 after passing the extending flow channels 4a ---, guided along the extending flow channels 42a --- in communication with the discharge region 5D and then flows down to the heat accumulators 4.

As described above, since the not processed exhaust gas after passing the charge region 5S does not short-pass along the open face of the heat accumulators 4 to the discharge region 5D but it requires a predetermined period of time for passing through the exhaust gas processing chamber 3, during which the gas is surely heated to a predetermined processing temperature and purified by combustion, the gas is not discharged without being processed as it is to the outside.

Since the extending flow channels 42a --- are formed of the honeycomb flow channels of the honeycomb structure 42 having a mesh size coarser than that of the heat accumulators 4, it has less heat accumulating effect compared with the heat accumulators 4 and exhibits less resistance to the passage of the exhaust gas.

Accordingly, there are scarcely thermal loss and lowering of the processing efficiency by the formation of the extending flow channels 42a.

### (Fourth Embodiment)

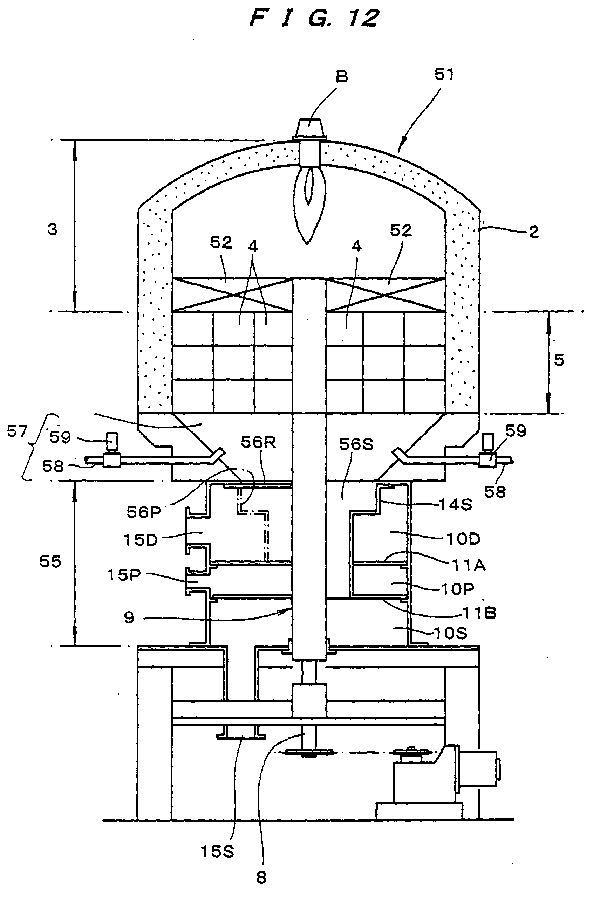

Fig. 12 show a further exhaust gas processing apparatus according to the present invention in which those portions in common with Fig. 1 to Fig. 3 carry the same reference numerals for which detailed explanations are to be omitted.

In an exhaust gas processing apparatus 51 of this embodiment, volatile organic compounds (hereinafter referred to as "VOC") contained in the exhaust gas discharged from drying furnaces for coating and other industrial plants are catalytically burnt for purification and nitrogen oxides (hereinafter referred to as "NOx") are purified by catalytic oxidation/reduction.

In an exhaust gas processing chamber 3 of an exhaust gas processing apparatus 51, a catalyst layer 52 is formed facing the heat accumulation chamber 5, and a burner B is disposed for elevating the temperature of the catalyst layer 52 to a predetermined catalytic combustion temperature.

For the catalyst layer 52, an NOx absorbing reduction type catalyst is used, the catalyst having a function of burning VOC (volatile organic compounds) contained in an exhaust gas at a predetermined catalyst combustion temperature and absorbing NOx in a lean state (oxygen excessive atmosphere) and reducing NOx to nitrogen in a rich state (reduction species rich atmosphere). The catalyst is formed, for example, by supporting noble metals such as platinum Pt or rhodium Rh on a support such as alumina, and supporting, as an NOx absorbent, for example, alkali metals such as lithium Li or potassium K, alkaline earth metals such as barium and rare earth metals.

At the bottom of the heat accumulation chamber 5, a charge/discharge distribution device 55 is disposed by way of a diffuser 54, which is radially partitioned in the inside each by 5° - 15° to form a plurality of 72 to 24 gas flow channels 53 ---.

The charge/discharge distribution device 55 is adapted to partition the heat accumulation chamber 5 into a charge region 5S, a discharge region 5D, a purge region 5P and a reducing region 5R and switch each of the regions successively.

A charging operation of introducing a not processed exhaust gas to the exhaust gas processing chamber 3 is conducted in the charge region 5S, a discharge operation of discharging a purified gas from the exhaust gas processing chamber 3 is conducted in the discharge region 5D, a purge operation of introducing a purge gas into the exhaust gas processing chamber 3 is conducted in the purge region 5P and a reducing operation of interrupting the flow of the exhaust gas and supplying a reducing gas to render the catalyst in a rich state is conducted in the reducing region 5R.

The charge/discharge distribution device 55 has a rotor 9 having a rotational shaft 8 along a vertical axis in a housing 7 and the rotor 9 comprises disks 11A and 11B for partitioning the inside of the housing 7 into a discharge chamber 10D at an upper stage, a purge chamber 10P at an intermediate stage and a charge chamber 10S at the lower stage, and an opened disk 56 that rotates opposing to the open face at the lower end of the diffuser 54.

The opened disk 56 comprises a charge opening 56S for introducing a not processed exhaust gas from the charge chamber 10S to the charge region 5S, a discharge opening 56D for discharging the purified gas from the discharge region 5D to the discharge chamber 10D, a purge opening 56P for communicating the purge chamber 10P with the purge region 5P and an interruption part 56R for interrupting the communication of the not processed exhaust gas and the processed exhaust gas in the reducing region 5R.

For each of the openings 56S, 56D and 56P, and the interruption part 56R, the discharge opening 56D with a central angle of about 170°, a first purge opening 56P with a central angle of about 27° a first charge opening 56S with a central angle of about 27° an interruption part 56 with a central angle of about 10°, a second charge opening 56R with a central angle of about 10°, a second charge opening 56S with a central angle of about 100° and a second purge opening 56P with a central angle of about 27° are formed in this order from the forward to the backward direction of the rotation of the opened disk 56.

Further, in the diffuser 54, a reducing gas supply device 57 is disposed for applying a reducing gas thereby attaining a rich state for the catalyst layer 52 facing the reducing region 5R.

The reducing gas supply device 57 comprises reducing gas supply pipes 58, 58 --- for supplying a hydrocarbon (for example, propylene) to be burnt under the presence of a catalyst as a reducing gas to each of the gas flow channels 53, 53 --- , ON-OFF valves 59, 59 --- each intervened to each of the reducing gas supply pipes 58, 58 --- and a control device 60 for opening/closing ON/OFF valves 59, 59 --- in the reducing gas supply pipes 58, 58--- connected to gas flow channels 53, 53 --- in communication with the reduction area 5R in synchronization with a rotation of the rotor 9.

A rotary encoder 61 is connected to the input of the control device 60 for detecting the position of the interruption part 56R based on the rotational angle of the rotor 9, and each of the ON/OFF vales 59, 59 --- is connected to the output side thereof and outputs a control signal for opening the valve to the ON/OFF valves 59 of the reducing gas supply tubes 58 connected to the gas flow channels 53 closed by the interruption portion 56R.

When a not processed exhaust gas is introduced from an exhaust gas generation source (not illustrated) such as a drying furnace for coating under rotation of the rotor 9 at 1/2 rpm in a state where the inside of the exhaust gas processing chamber 3 is elevated to a predetermined catalytic combustion temperature by burning the burner B, the gas is introduced through the charge chamber 10S - gas flow channel 53 - charge region 5S of the heat accumulation chamber 5 into the exhaust gas processing chamber 3 in this embodiment.

Since the exhaust gas processing chamber 3 is kept at a predetermined catalytic combustion temperature, when the not processed exhaust gas passes through the catalyst layer 52, VOC contained in each of the not processed exhaust gas is burnt.

Further, since oxygen is contained in the not processed exhaust gas introduced into the exhaust gas processing chamber 3, the catalyst layer 52 facing the charge region 5S and the discharge region 5D reaches a lean state and, as a result, NOx contained in the exhaust gas is oxidized and absorbed as nitrate (NO₃)⁻.

In this way, VOC contained in the not processed exhaust gas introduced into the exhaust gas processing chamber 3 is catalytically burnt and eliminated by the catalyst layer 52 and NOx is absorbed and eliminated in the catalyst layer 52.

Then, the heat of the purified gas, when passing the discharge region 5S of the heat accumulation chamber 5, is recovered and the gas passes through the gas flow channel 53 of the diffuser 54 - discharge opening 13D - discharge chamber 10D and is discharge to the outside.

On the other hand, a reducing gas comprising, for example, propylene (C₃H₆) is supplied from the reducing gas supply pipe 68 to the gas flow channel 53 interrupted by the interruption part 56R of the opened disk 56 and the reducing gas passes through the gas flow channel 53 and the reducing region 5R and reaches the catalyst layer 52 facing them.

In this process, since oxygen in the gas flow channels 53 and the reducing region 5R is forced out, and the not processed exhaust gas is not introduced from the charge/discharge distribution device 55, oxygen is not supplied.

Accordingly, the catalyst layer 52 facing the reducing region 5R attains a rich state reliably, in which oxygen of NOx absorbed as nitrate (NO₃)⁻ in the catalyst layer 52 and propylene (C₃H₆) are reacted and burnt to form nitrogen (N₂), water (H₂O) and carbon dioxide (CO₂).

Thus, NOx is reduced to nitrogen (N₂) and discharged and then discharged through the discharge region 5D to the outside.

In this process, even if the excess reducing gas passes through the catalyst layer 52, since this is burnt in reaction with oxygen contained in the exhaust gas introduced in the exhaust gas processing chamber 3, the reducing gas is not discharged as it is to the outside.

When a hydrocarbon such as propylene is supplied as the reducing gas, since this generates heat when burnt in the catalyst layer 52, the temperature of the catalyst layer 52 is maintained at a predetermined catalytic combustion temperature with this generated heat and the heat generated upon combustion of the VOC contained in the exhaust gas in the catalyst layer 52, so that there is no requirement of heating the inside of the exhaust gas processing chamber 3 by the burner b after starting the exhaust gas processing.

Further, according to the experiment conducted by the inventor, since the time about 1/120 of one rotation of the rotor 9 may suffice as the absorption time/reduction time of NOx in the exhaust gas processing apparatus 51 of this embodiment, it is enough to supply the reducing gas under the rich state only for one second when the rotor 9 rotates, for example, at 1/2 rpm (120 sec for one rotation).

For instance, when the angle of the interruption part 56R is selected to 10° and the central angle for each of the gas flow channels 53, 53 --- of the diffuser 54 is selected to 5°, the time that one gas flow channel 53 is interrupted by the interruption part 56R is about 1.6 sec, so that a sufficient time is ensured to reduce NOx absorbed in the catalyst layer 52 into nitrogen (N₂).

As described above, since VOC is burnt and NOx is absorbed in the catalyst layer 52 facing the charge region 5S and the discharge region 5D, and NOx is reduced to nitrogen (N₂) in the catalyst layer 52 facing the exhaust gas interruption region 5R and each of the regions in the heat accumulation chamber 5 is successively switched by the rotation of the rotor 9, absorption and reduction of NOx can be conducted alternately without interrupting the purifying processing for the exhaust gas.

In this case, since the purge chamber 10P is formed between the charge chamber 10S and the discharge chamber 10D in the rotor 9 of the charge/discharge distribution device 55, the purge chamber 10P functions also as the air seal which prevents the not processed exhaust gas supplied to the charge chamber 10S from leaking directly to the discharge chamber 10D.

Further, since the purge openings 56P and 56P formed in the opened disk 56 are formed between the charge opening 56S and the discharge opening 56D, it functions also as the air seal for preventing the not processed exhaust gas from leaking to the discharge side through the gap between the opened disk 56 and the diffuser 54.

While the foregoing explanations have been made to a case of using hydrocarbons such as propylene as the reducing gas, the present invention is not restricted only thereto but ammonia (NH₃), hydrogen (H₂) and like other reducing gas used so far may also be adopted so long as it can consume oxygen.

However, since hydrocarbon is less expensive compared with other reducing gas such as ammonia and generates heat by catalytic combustion during operation, the exhaust gas processing chamber 3 can be maintained by the heat to the catalytic combustion temperature making it no more necessary for burning the burner B, so that it provides a merit capable of further reducing the running cost.

### (Fifth Embodiment)

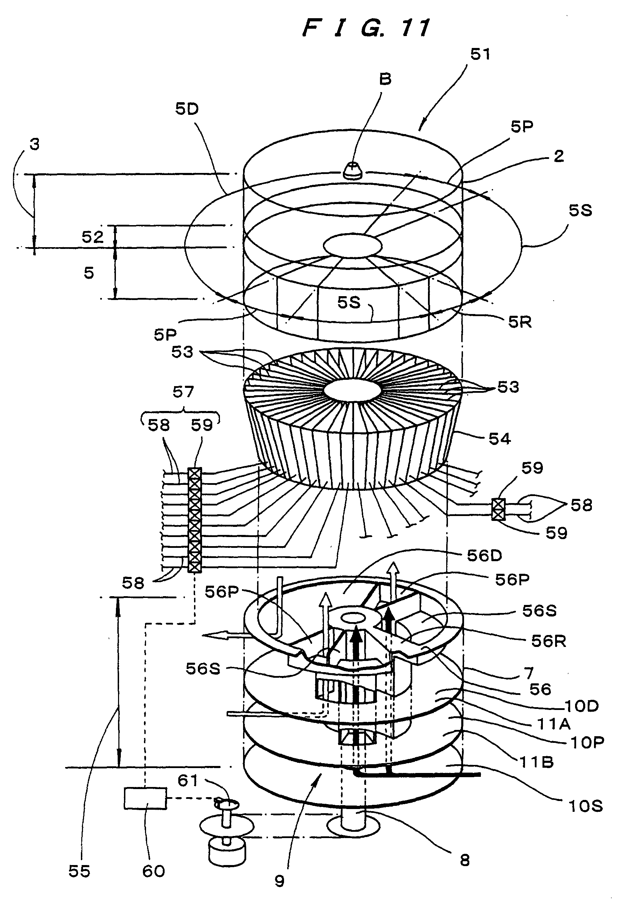

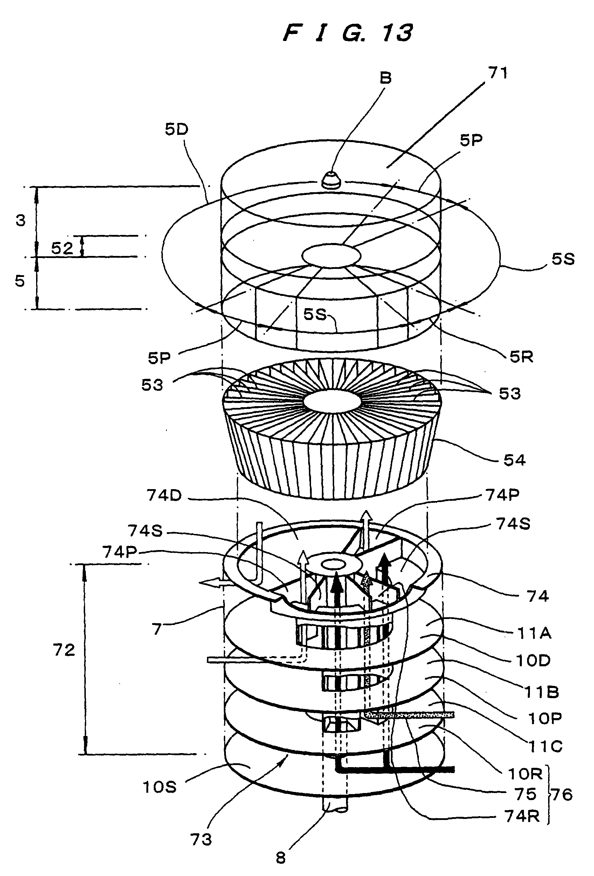

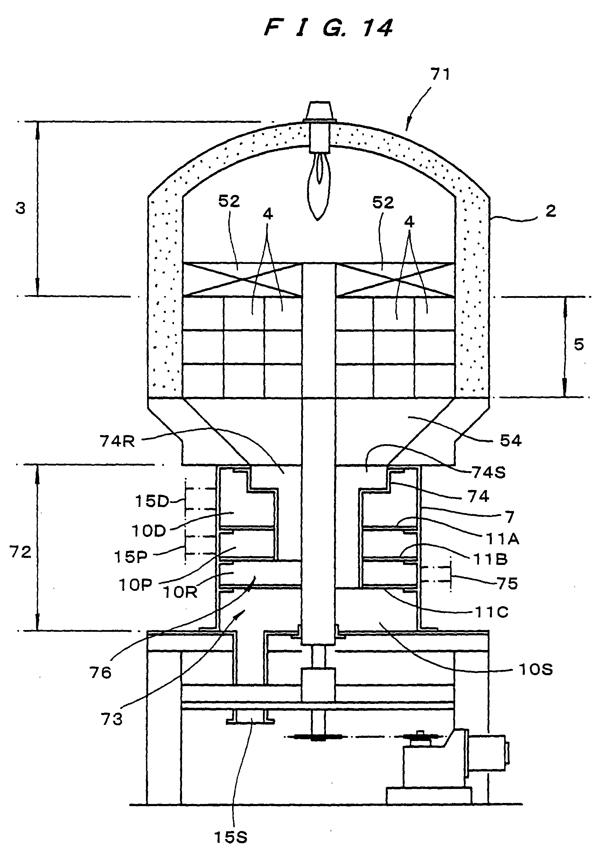

Fig 13 and Fig. 14 show an exhaust gas processing apparatus for purification processing of exhaust gas containing VOC and NOx, in which those portions in common with Fig. 11 and Fig. 12 carry the same reference numeral, for which detailed explanations are to be omitted.

In an exhaust gas processing apparatus 71 of this embodiment, a reducing gas is supplied by a charge/discharge distribution device 72 disposed at a lower stage of a processing tower 2.

The charge/discharge distribution device 72 is partitioned into four layers by a rotor 73 in the housing 7 into a discharge chamber 10D, a purge chamber 10P, a reducing gas chamber 10R and a charge chamber 10S from above, and an opened disk 74 that rotates opposing to the open face at the lower end of the diffuser 54 is disposed.

In the opened disk 74, a discharge opening 74D, a first purge opening 74P, a first charge opening 74S, a reducing gas supply opening 74R, a second charge opening 74S and a second purge opening 74P are formed from the forward to the backward direction of the rotation.

A charge operation of introducing the not processed exhaust gas into the exhaust gas processing chamber 3 is conducted in the charge region 5S of the heat accumulation chamber 5 in communication with the charge opening 74S, a discharge operation of discharging the purified gas to the discharge chamber 10D is conducted in the discharge region 5D of the heat accumulation chamber 5 in communication with the discharge opening 74D, a reducing operation of supplying a reducing gas to the catalyst layer 52 is conducted in the reducing region 5R of the heat accumulation chamber 5 in communication with the reducing gas supply opening 74R, and a purge operation of introducing, for example, the purified gas thereby purging the not processed exhaust gas remaining in the purge region 5P is conducted in the purge region 5P in communication with the purge opening 74P.

In this case, since the purge openings 74P, 74P are formed between the charge opening 74S and the discharge opening 74D, they function also as the air seal for preventing the not processed exhaust gas from leaking to the charge side through the gap between the opened disk 74 and the diffuser 54.

Since the purge chamber 10P is formed between the charge chamber 10S and the discharge chamber 10A, it also serves as the air seal and prevents the not processed exhaust gas supplied to the charge chamber 10S from leaking directly to the discharge chamber 10D.

Further, a reducing gas supply device 76 is constituted with the reducing gas chamber 10R, a reducing gas supply pipe 75 connected therewith and the reducing gas supply opening 74R, and a reducing gas is supplied to the reducing gas chamber 10R such that the inner pressure is higher than that in the adjacent purge chamber 10P and the charge chamber 10S.

With this constitution, oxygen-containing air does not flow into the reducing gas chamber 10R and since the reducing gas is supplied to and burnt in the exhaust gas processing chamber even when the gas flows out to the charge chamber 10S or the purge camber 10P, it does not leak to the outside.

According to this embodiment, since the reducing gas can be supplied to the catalyst layer 52 facing the reducing region 5R by way of the charge/discharge distribution device 72 by continuously supplying the reducing gas from the reducing gas supply pipe 75, a troublesome valve control caused by the provision of a number of reducing gas supply pipes is no more required.

Other constitutions, procedures for processing the exhaust gas and removal of VOC and NOx contained in the exhaust gas are quite identical with those in the exhaust gas processing apparatus 1 shown in Fig. 11 and Fig. 12.

As has been described above according to the present invention, since the purge chamber is formed between the charge chamber and the discharge chamber in the charge/discharge distribution device, even when the not processed exhaust gas supplied to the charge chamber should leak through the gap between the housing and the rotor, it flows only to the purge chamber and does not pass through the purge chamber and further reach the discharge chamber, so that leakage of the not processed exhaust gas from the charge chamber to the discharge chamber in the charge/discharge distribution device can be prevented reliably.

Further, since the purge opening is formed between the charge opening and the discharge opening in the opened disk, even when the not processed exhaust gas passes through the gap between the rotor and the accumulation chamber and flows to the discharge opening, since this not processed exhaust gas is interrupted by the purge gas flowing from the purge opening disposed before the discharge opening, the not processed gas does not reach the discharge opening and, accordingly, it can provide an excellent effect capable of preventing leakage of the not processed exhaust gas passing between the charge/discharge distribution device and the heat accumulation chamber.

Further, corresponding to the opened disk of the rotor, a purge region is formed between the charge region and the discharge region also in the heat accumulation chamber and the charge region and the discharge region are not formed adjacent with each other. Accordingly, even when the not processed exhaust gas passing through the charge region should flow toward the exhaust region, without being burnt completely in the exhaust gas processing chamber, the flow of the gas is inhibited by the purge gas blown out of the purge region and returned to the exhaust gas processing chamber or sucked into the purge region, so that it can be prevented from flowing into the discharge region and exhausted as it is to the outside.

## Claims

1. An exhaust gas processing apparatus having a charge/discharge distribution device adapted to divide a heat accumulation chamber for conducting heat exchange between a purified gas at a high temperature after combustion processing in an exhaust gas processing chamber and a not-processed exhaust gas at a low temperature to be introduced in the exhaust gas processing chamber into at least three regions including a charge region of introducing the not processed exhaust gas into the exhaust gas processing chamber, a discharge region of discharging the purified gas from the exhaust gas processing chamber and a purge region of passing a purge gas for discharging the not processed exhaust gas remaining in the heat accumulation chamber, and switching each of the regions successively,
the charge/discharge distribution device having a rotor equipped with a purge chamber for passing the purge gas between a charge chamber for introducing the not processed exhaust gas and a discharge chamber for discharging the purified gas,
the rotor having an opened disk that rotates opposing to the lower surface of the heat accumulation chamber, and
an opened disk comprising a charge opening for introducing the not processed exhaust gas from the charge chamber to the charge region and a discharge opening for discharging the purified gas from the discharge region to the discharge chamber which are formed along the rotational direction, and a purge opening which is formed between the charge opening and the discharge opening for communicating the purge chamber with the purge region.

2. An exhaust gas processing apparatus as defined in claim 1, wherein heat accumulators filled in the heat accumulation chamber comprise honeycomb structures (monolith) having a plurality of vertically penetrating heat exchanging flow channels formed therein.

3. An exhaust gas processing apparatus as defined in claim 1, wherein the heat accumulation chamber is partitioned into a plurality of vertically penetrating heat exchanging flow channels and a heat accumulators are filled in each of the heat exchanging flow channels.

4. An exhaust gas processing apparatus as defined in claim 1, wherein a support frame for supporting the heat accumulators is disposed to the open face at the lower end of the heat accumulation chamber, a gap corresponding to the thickness of the support frame is formed between the rotor and the heat accumulators, and honeycomb structures having a plurality of vertically penetrating flow channels of small diameter formed therein are filled in the gap.

5. An exhaust gas processing apparatus as defined in claim 1, wherein a partition plate is disposed rotatably in synchronization with the rotation of the rotor to the open face of the upper end of the heat accumulators opposing to the exhaust gas processing chamber for partitioning a region of flowing a gas into the exhaust gas processing chamber and a region for discharging the gas.

6. An exhaust gas processing apparatus as defined in claim 1, wherein a driving device for rotating the rotor has a rotational number controller for variably controlling the number of rotation between the ordinary operation and the burn out operation for eliminating resinous materials or soots deposited to the heat accumulators filled in the heat accumulation chamber and the number of rotation of the rotor is lowered than the number of rotation during the ordinary operation such that the lower end of the heat accumulators is heated to an evaporating temperature of the resinous materials during the burn out operation.

7. An exhaust gas processing apparatus as defined in claim 1, wherein a seal mechanism is formed along the circumferential edge of the apertured disc opposing to the lower end face of the circumferential wall of the heat accumulation chamber, for preventing the exhaust gas from leaking through the gap formed at the circumferential edge thereof, and the seal mechanism has a concave groove in communication with the purge chamber being formed to the outside of one or both of the charge opening and the discharge opening, and a gap adjusting member of a groove-shaped cross sectional configuration fitted vertically moveably with the open face being downwarded in the concave groove to which the purge gas is supplied from the purge chamber, for adjusting the gap formed between the lower end surface of the circumferential wall of the heat accumulation chamber and the opened disk.

8. An exhaust gas processing apparatus as defined in claim 1, wherein heat accumulators of honeycomb structures are disposed to the heat accumulation chamber, and extending flow channels for extending the honeycomb flow channels of the heat accumulators as heat exchanging flow channels are constituted with honeycomb flow channels of honeycomb structures having a mesh coarser than that of the heat accumulators.

9. An exhaust gas processing apparatus as defined in claim 8, wherein the internal temperature of the extending flow channels is set to an exhaust gas processing temperature for combustion processing of burnable noxious ingredients contained in the not processed exhaust gas.

10. An exhaust gas processing apparatus as defined in claim 1, wherein
a catalyst layer constituted with an NOx absorption/reduction type catalyst is formed being opposed to the heat accumulation chamber in the exhaust gas processing chamber, the catalyst having a function of burning volatile organic compounds VOC contained in the not processed exhaust gas and reducing nitrogen oxides (NOx) absorbed in an oxygen rich atmosphere into nitrogen in a reducing species rich atmosphere and
the charge/discharge distribution device is adapted to divide the heat accumulation chamber into a charge region, a discharge region, a purge region and a discharge gas interruption region for interrupting the communication of the discharge gas and successively switch each of the regions, and
a reducing gas supply device is provided for supplying a reducing gas to the discharge gas interruption region of the heat accumulation chamber and exposing the catalyst layer facing the interruption region to the reducing species rich atmosphere.

11. An exhaust gas processing apparatus as defined in claim 10, wherein the reducing gas is a hydrocarbon which is burnt under the presence of a catalyst.

12. An exhaust gas processing apparatus as defined in claim 10, wherein
a charge opening, a purge opening and a discharge opening are formed to the opened disk of the charge/discharge distribution device and an interruption part is disposed for interrupting the flow of the not processed exhaust gas and the processed exhaust gas in the heat accumulation chamber,
the charge/discharge distribution device and the heat accumulation chamber are in communication with each other by a diffuser which is radially partitioned at the inside thereof to form a plurality of gas flow channels, and
a reducing gas supply device is disposed for supplying the reducing gas into the gas flow channel interrupted by the interruption part of the opened disk in synchronization with the rotation of the rotor.

13. An exhaust gas processing apparatus as defined in claim 10, wherein a charge chamber, a purge chamber and a discharge chamber are formed and a reducing gas chamber for introducing a reducing gas is formed to the rotor of the charge/discharge distribution device, and
a charge opening, a purge opening and a discharge opening are formed and a reducing gas supply opening for introducing the reducing gas from the reducing gas chamber to the discharge gas interruption region is formed to the opened disk.
